# EUROPÄISCHE PATENTSCHRIFT

(11) **EP 1 333 572 B1**
(45) Veröffentlichungstag und Bekanntmachung des Hinweises auf die Patenterteilung: **07.03.2007**
(21) Anmeldenummer: 03000348.7
(22) Anmeldetag: 09.01.2003
(51) Int. Cl.: H02P 8/00, G01D 11/16, G01D 7/00

(54) **Schaltungsanordnung zur kontrollierten Rückstellung eines von einem Schrittmotor angetriebenen Zeigers bei Ausfall der Versorgungsspannung**
Circuit for a controlled reset of a stepper motor driven pointer during loss of power en cas de défaillance
Circuit de remise à zéro controllé pour un pointeur entraîné d'un moteur pas à pas

(30) Priorität: 30.01.2002 DE 10203670
(43) Veröffentlichungstag der Anmeldung: 06.08.2003
(73) Patentinhaber: SIEMENS AKTIENGESELLSCHAFT, 80333 München (DE)
(72) Erfinder: Adams, Jürgen, 78052 Villingen-Schwenningen (DE)

(56) Entgegenhaltungen:
- DE-A- 3 320 088
- DE-A- 4 310 060
- DE-A- 19 728 294
- PATENT ABSTRACTS OF JAPAN Bd. 2000, Nr. 04, 31. August 2000 (2000-08-31) & JP 2000 018975 A (NIPPON SEIKI CO LTD), 21. Januar 2000 (2000-01-21)

## Beschreibung

Die Erfindung betrifft eine Schaltungsanordnung zur kontrollierten Rückstellung eines von einem Schrittmotor angetriebenen Zeigers bei Ausfall der Versorgungsspannung, wobei die Schaltungsanordnung eine Steuerschaltung zur Ansteuerung des Schrittmotors besitzt. Eine solche Schaltung ist aus der DE 4310060 bekannt geworden. Die bevorzugte Anwendung der Erfindung bezieht sich auf eine analoge Anzeigevorrichtung in einem Kombiinstrument eines Fahrzeugs, wobei die Anzeigevorrichtung eine für die Betriebssicherheit des Fahrzeugs wichtige Meßgröße anzeigt. Eine derartige Anzeigevorrichtung ist beispielsweise die Bremsdruckanzeige im Kombiinstrument eines Nutzfahrzeugs.

Eine analoge Anzeigevorrichtung für ein Fahrzeug mit einem von einem Schrittmotor angetriebenen Zeiger ist zum Beispiel aus dem Dokument DE 33 20 088 A1 bekannt. Bei derartigen Anzeigevorrichtungen treibt ein elektromagnetisch angetriebener Rotor des Schrittmotors die Achse des Zeigers an. Der Antrieb erfolgt dabei fast immer über ein untersetzendes Getriebe. Als Getriebe finden zum Beispiel Stirnradgetriebe, die mitunter sogar mehrstufig ausgelegt sind, ebenso Anwendung wie Schneckengetriebe oder Spindelgetriebe. Aufgrund des Getriebes sowie wegen der Eigenhemmung des permanentmagnetisch ausgeführten Rotors des Schrittmotors ist es nicht möglich, die Rückstellung des Zeigers in dessen Nullposition bzw. auf einen anderen in bezug auf die Skalierung der Anzeigevorrichtung unkritischen Anzeigewert durch eine Rückstellfeder zu bewerkstelligen, wie es bei Anzeigevorrichtungen möglich ist, die von einem Kreuzspulenmeßwerk oder einem Drehspulenmeßwerk angetrieben werden, die ihrerseits prinzipbedingt über eine Rückstellfeder verfügen.

Analoge Anzeigevorrichtungen mit einem von einem Schrittmotor angetriebenen Zeiger besitzen demnach keine definierte Ruhestellung im nicht bestromten bzw. im nicht angesteuerten Zustand. Denn bei diesen Anzeigevorrichtungen wird der von einem Schrittmotor angetriebene Zeiger durch digital berechnete Winkelschritte positioniert, so daß auch die Rückstellung des Zeigers in dessen auf die Skala der Anzeigevorrichtung bezogene Nullposition durch eine entsprechende Steuerschaltung des Schrittmotors erfolgen muß. Diese Positionierung des Zeigers wird beispielsweise durch einen lotrecht zur Skala der Anzeigevorrichtung angebrachten mechanischen Anschlag für den Zeiger unterstützt.

Bei einem ungeplanten, plötzlich auftretenden Ausfall der Versorgungsspannung für die Steuerschaltung des Schrittmotors, wobei der Ausfall auch durch eine Überlastung des Bordnetzes ausgelöst werden kann, fehlt dieser Steuerschaltung, die zumeist aus einem Mikrocontroller besteht, die notwendige Zeit, um den vom Schrittmotor angetriebenen Zeiger in dessen Nullposition bzw. auf einen anderen in bezug auf die Skalierung der Anzeigevorrichtung unkritischen Anzeigewert zurückzustellen, so daß der Zeiger über der Skala der Anzeigevorrichtung in der zuletzt angesteuerten Position verharrt. Wenn nun diese Anzeigevorrichtung dafür verwendet wird, eine für die Betriebssicherheit eines Fahrzeugs wichtige Meßgröße anzuzeigen, wie es beispielsweise bei einer den Bremsdruck anzeigenden Anzeigevorrichtung im Kombiinstrument eines Nutzfahrzeugs der Fall ist, soll der Zeiger beim Ausfall der Versorgungsspannung jedoch einen unkritischen Wert anzeigen. In dem genannten Beispiel sollen also 0 bar Bremsdruck angezeigt werden.

Die Aufgabe der vorliegenden Erfindung besteht demnach darin, eine Schaltungsanordnung zur kontrollierten Rückstellung eines von einem Schrittmotor angetriebenen Zeigers bei Ausfall der Versorgungsspannung aufzuzeigen.

Die Aufgabe wird durch eine Schaltungsanordnung zur kontrollierten Rückstellung eines von einem Schrittmotor angetriebenen Zeigers bei Ausfall der Versorgungsspannung gelöst, die die Merkmale des ersten Anspruchs aufweist.

Die vorgeschlagene Lösung soll nun noch anhand von drei Figuren näher erläutert werden. Dabei zeigen
- Figur 1: ein Netzteil eines Kombiinstruments mit den erfindungsgemäßen Merkmalen, wobei die Energiepufferung auf das gesamte vom Netzteil energieversorgte elektrische System wirkt,
- Figur 2: ein Netzteil eines Kombiinstruments mit den erfindungsgemäßen Merkmalen, wobei die Energiepufferung rung nur auf den Schrittmotor und dessen Steuerschaltung wirkt,
- Figur 3: ein Kombiinstrument mit einem vereinfachten Netzteil und
- Figur 4: zwei Gestaltungsoptionen zur Durchführung der kontrollierten Rückstellung eines von einem Schrittmotor angetriebenen Zeigers bei Ausfall der Versorgungsspannung.

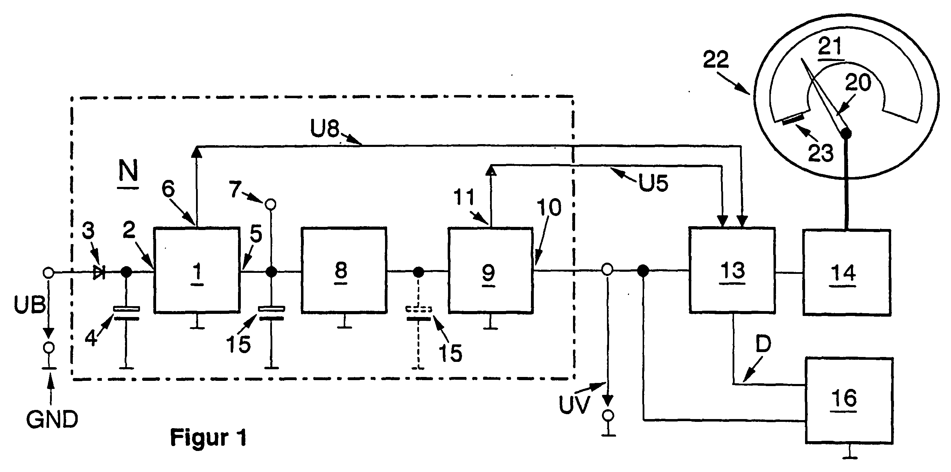

**Figur 1** zeigt als ein Ausführungsbeispiel der Erfindung in einer vereinfachten Blockdarstellung mit strichpunktierter Umrandung ein Netzteil N, wie es für ein Kombiinstrument in einem Fahrzeug verwendet werden könnte. Ein solches Netzteil N besitzt ein Schaltnetzteil 1, an dessen Eingang 2 die Betriebsspannung UB aus dem elektrischen Bordnetz des Fahrzeugs über eine hier in Form einer Diode ausgebildete Verpolschutzeinrichtung 3 sowie über ein aus einem Kondensator bestehendes Filterelement 4 gegen Masse GND anliegt. In dem hier gezeigten Beispiel soll angenommen werden, daß das Schaltnetzteil 1 die eingangsseitig anliegende Betriebsspannung UB an seinem Ausgang 5 auf eine Gleichspannung von 8 Volt stabilisiert. Das Schaltnetzteil 1 soll aber auch einen Steuerausgang 6 besitzen, an dem dann ein Signal U8 anliegt, falls die am Ausgang 5 des Schaltnetzteils 1 anliegende Spannung infolge eines massiven plötzlichen Einbruchs der Betriebsspannung UB auf unter 8 Volt abfällt. Im Schaltnetzteil 1 wird demnach die abrupte Unterschreitung einer bestimmten Spannungsschwelle detektiert. Manche elektronische Bauelemente im Kombiinstrument, wie zum Beispiel LED's vom Typ GaN, müssen mit der Ausgangsspannung von 8 Volt direkt versorgt werden, weil sie mit einer niedrigeren Spannung aufgrund ihrer hohen Schwellenspannung nicht betrieben werden können. Für die elektrische Versorgung derartiger Bauelemente ist dem Schaltnetzteil 1 ein Abgriff 7 nachgeordnet. Jedoch erfordern viele Schaltkreise eine recht präzise auf 5 Volt ausgeregelte Versorgungsspannung UV mit geringerer Restwelligkeit, als sie am Ausgang 5 des Schaltnetzteils 1 zur Verfügung steht, weshalb in der Praxis die Ausgangsspannung des Schaltnetzteils 1 über ein Entkopplungsglied 8 häufig einem Linearregler 9 zugeführt wird, an dessen Ausgang 10 dann die Versorgungsspannung UV für diverse im Kombiinstrument vorhandene Schaltkreise abgegriffen wird. Meist gehört ein in einem Kombiinstrument befindlicher Schrittmotor 14 samt seiner Steuerschaltung 13 zu den mit 5 Volt versorgten Schaltkreisen bzw. elektrischen Bauelementen. Auch der Linearregler 9 kann einen Steuerausgang 11 besitzen, an dem ein Signal U5 anliegt, falls die am Ausgang 10 anliegende Gleichspannung von 5 Volt unterschreitet.

Erfindungsgemäß wird nun die Versorgungsspannung UV zumindest für die Steuerschaltung 13 des Schrittmotors 14 mit mindestens einem Pufferkondensator 15 gepuffert, wobei der mindestens eine Pufferkondensator 15 in seiner Kapazität derart ausgelegt ist, daß er die Steuerschaltung 13 für den Schrittmotor 14 wenigstens solange mit elektrischer Energie versorgt, bis die Steuerschaltung 13 den vom Schrittmotor 14 angetriebenen Zeiger 20 in eine auf die Skala 21 der Anzeigevorrichtung 22 bezogene NullPosition 23 bzw. auf einen anderen in bezug auf die Skalierung der Anzeigevorrichtung unkritischen Anzeigewert bewegt hat. Dieser Pufferkondensator 15 kann zum Beispiel am Ausgang 5 des Schaltnetzteils 1 oder, wie in der Figur 1 durch einen gestrichelt eingezeichneten Pufferkondensator 15 angedeutet ist, am Eingang des Linearreglers 9 angeordnet sein.

Dieser Pufferbetrieb der Steuerschaltung 13 für den Schrittmotor 14 setzt ein, sobald entweder aufgrund einer Störung im elektrischen Bordnetz des Fahrzeugs die Betriebsspannung UB oder aufgrund einer Störung im Netzteil N die Versorgungsspannung UV für die Steuerschaltung 13 des Schrittmotors 14 unter eine bestimmte Schwellenspannung US sinkt, die zum sicheren Betrieb des im Kombiinstrument angeordneten Schrittmotors 14 samt seiner Steuerschaltung 13 erforderlich ist. Denn diese Unterschreitung der erforderlichen Versorgungsspannung UV wird vom Schaltnetzteil 1 oder vom Linearregler 9 oder gegebenenfalls auch von beiden Schaltkreisen erkannt. Das an den jeweiligen Steuerausgängen 6 bzw. 11 anstehende Signal U8 bzw. U5 wird der Steuerschaltung 13 des Schrittmotors 14 zugeführt, wodurch die Steuerschaltung 13 den Befehl erhält, den vom Schrittmotor 14 angetriebenen Zeiger 20 in die auf die Skala 21 der Anzeigevorrichtung 22 bezogene Nullposition 23 bzw. auf einen anderen in bezug auf die Skalierung der Anzeigevorrichtung unkritischen Anzeigewert zu bewegen.

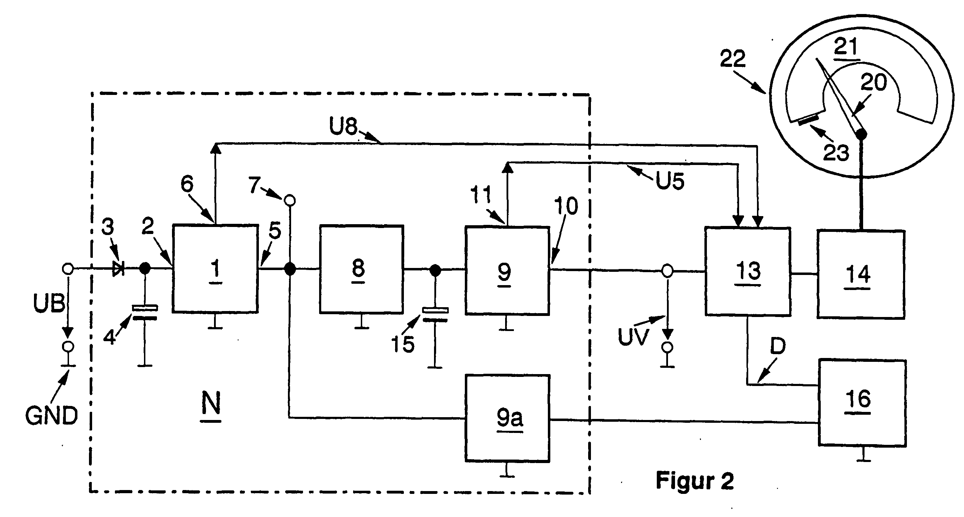

Je nach Ausgestaltung des Kombiinstruments kann die Energiepufferung auf das gesamte an den Linearregler 9 angeschlossene elektrische System 16 wirken oder nur auf den Schrittmotor 14 und seine Steuerschaltung 13. Der zuerst genannte Gestaltungsfall entspricht dem in der Figur 1 dargestellten Ausführungsbeispiel und ist dann von Vorteil, wenn das an den Linearregler 9 angeschlossene elektrische System 16 relativ klein ist, also dessen Betriebsstrom relativ klein ist im Verhältnis zum Betriebsstrom des Schrittmotors 14 und seiner Steuerschaltung 13. Die zweite Ausgestaltung, bei der die Energiepufferung allein auf den Schrittmotor 14 und dessen Steuerschaltung 13 wirken soll, ist in der **Figur 2** aufgezeigt. Man wird diese Variante in der Ausführung der Erfindung dann wählen, wenn das übrige im Kombiinstrument vorgesehene elektrische System 16 einen im Verhältnis zum Betriebsstrom des Schrittmotors 14 und seiner Steuerschaltung 13 ungünstig hohen Betriebsstrom benötigt. Diese letztere Ausgestaltung hat andererseits den Vorteil, daß die Energiepufferung im Notbetrieb tatsächlich uneingeschränkt zur Rückstellung des vom Schrittmotor 14 angetriebenen Zeigers 20 zur Verfügung steht. Wie aus der Figur 2 ersichtlich ist, wird man in diesem Fall im Netzteil N am Ausgang 5 des Schaltnetzteils 1 einen Leitungszweig anordnen, über den parallel zum Energieversorgungspfad für den Schrittmotor 14 und dessen Steuerschaltung 13 das übrige elektrische System 16 über einen Linearregler 9a energieversorgt wird. In beiden Beispielen zur Ausführung der Erfindung besteht vorteilhafterweise eine Datenleitung D zwischen der Steuerschaltung 13 des Schrittmotors 14 und dem aus dem Netzteil N energieversorgten elektrischen System 16, um im Notbetrieb, wenn das Signal U8 bzw. U5 an der Steuerschaltung 13 des Schrittmotors 14 ansteht, durch geeignete Maßnahmen auch auf das übrige elektrische System 16 Einfluß nehmen zu können. Die Datenleitung D kann bidirektional ausgeführt sein, um beispielsweise Störungen im elektrischen System 16 an die Steuerschaltung 13 des Schrittmotors 14 zu melden.

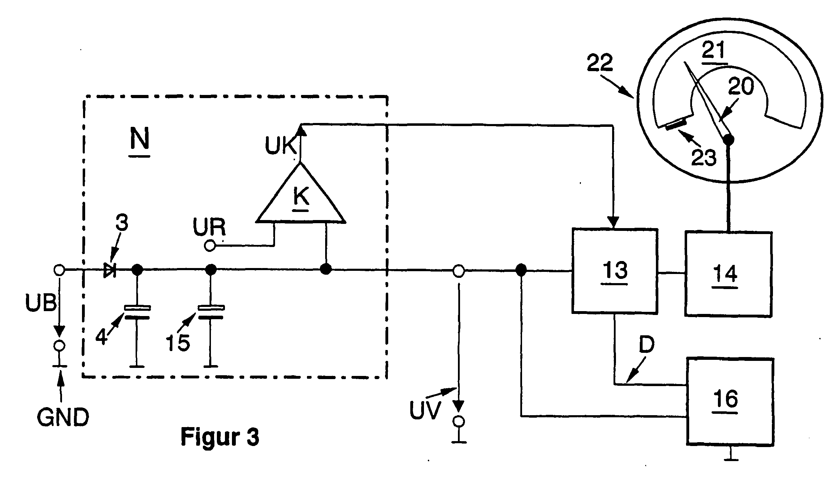

Nun ist nicht in jedem Fall das Netzteil N eines Kombiinstruments mit einem Schaltnetzteil 1 oder einem Linearregler 9 ausgestattet. In diesem Fall wird man, wie in der **Figur 3** gezeigt, mindestens einen Pufferkondensator 15 bereits in der elektrischen Eingangsbeschaltung des Kombiinstruments vorsehen, also am Anschluß der Betriebsspannung UB, jedoch dann mit der Maßgabe, daß dieser Pufferkondensator 15 auf die dort am Eingang maximal auftretende Betriebsspannung UB ausgelegt ist. Um der Steuerschaltung 13 des Schrittmotors 14 den Befehl zur Rückstellung des Zeigers zu geben, wird dort in der elektrischen Eingangsbeschaltung vorzugsweise ein Komparator K zum Vergleich der anliegenden Betriebsspannung UB mit einem voreingestellten Referenzwert UR vorgesehen, wobei das Ausgangssignal UK des Komparators K der Steuerschaltung 13 des Schrittmotors 14 in derselben Weise zugeführt wird, wie die Signale U5 bzw. U8 bei den zuvor beschriebenen Ausführungsbeispielen. Mit der Auslösung der eine abrupte elektrische Unterversorgung anzeigenden Signalen U5, U8 oder UK werden mit Ausnahme der Steuerschaltung 13 des Schrittmotors 14 alle anderen elektrischen Verbraucher und Lasten im elektrischen System 16 des Kombiinstruments, wie zum Beispiel Kontrolleuchten und Beleuchtungen von Anzeigevorrichtungen abgeschaltet, so daß die nun aus dem mindestens einen Pufferkondensator 15 bezogene Energie möglichst vollständig für die Rückstellung des vom Schrittmotor 14 angetriebenen Zeigers 20 in dessen Nullposition 23 bzw. auf einen anderen in bezug auf die Skalierung der Anzeigevorrichtung unkritischen Anzeigewert zur Verfügung steht.

Die eigentliche Rückstellung des vom Schrittmotor 14 angetriebenen Zeigers 20 in dessen Nullposition 23 bzw. auf einen anderen in bezug auf die Skalierung der Anzeigevorrichtung unkritischen Anzeigewert kann dabei auf verschiedene Weise ausgeführt werden. Zum einen kann man die Polaritäten der elektrischen Polmagnete des Rotors des Schrittmotors 14 in rascher Folge wechseln. Dadurch läuft der mit dem Rotor verbundene Zeiger 20 ohne Zwischenstellungen beispielsweise gegen einen lotrecht auf der Skala 21 der Anzeigevorrichtung 22 stehenden mechanischen Anschlag, der die Nullposition 23 bzw. einen anderen in bezug auf die Skalierung der Anzeigevorrichtung unkritischen Anzeigewert markiert.

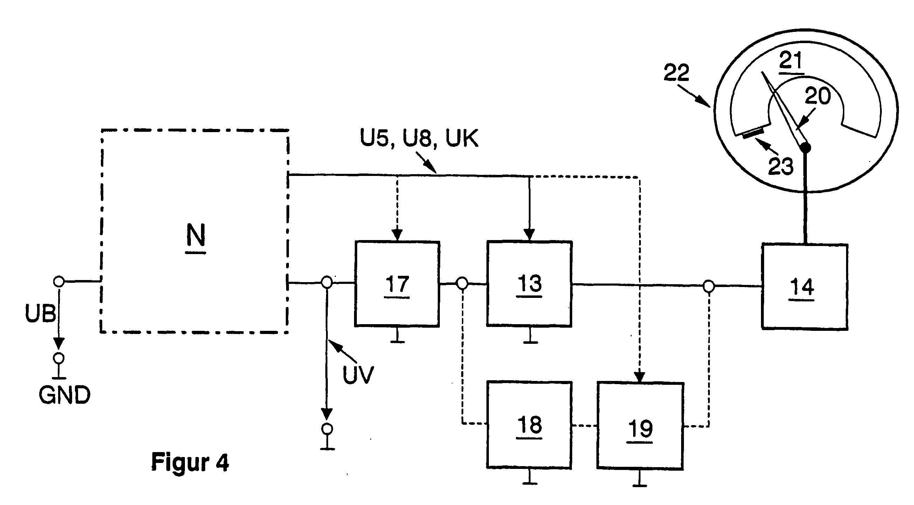

Bei anderen Ausgestaltungen ist in der elektronischen Schaltungsanordnung des Kombiinstruments eine zentrale Steuereinheit 17 in Form eines Mikroprozessors zur Wahrnehmung übergeordneter Steuerungsaufgaben vorgesehen, wie es die **Figur 4** zeigt. Diese zentrale Steuereinheit 17 wird in Anlehnung an die Darstellung in den Figuren 1 bis 3 durch ein Netzteil N, das aus einem Schaltnetzteil 1 mit oder ohne einen Linearregler 9 bzw. 9a oder aus einer noch einfacheren elektrischen Eingangsbeschaltung des Kombiinstruments besteht, energieversorgt. An diese zentrale Steuereinheit 17 ist dann die aus einem Mikrocontroller bestehende Steuerschaltung 13 des Schrittmotors 14 angeschlossen. Falls mehrere Anzeigen des Kombiinstruments von einem Schrittmotor angetrieben werden, mag nur derjenige Schrittmotor 14 eine eigenständige, jedoch mit der zentralen Steuereinheit 17 verbundene Steuerschaltung 13 besitzen, wenn dieser Schrittmotor 14 dafür verwendet wird, den Zeiger 20 einer Anzeigevorrichtung 22 zu bewegen, die eine für die Betriebssicherheit des Fahrzeugs wichtige Meßgröße anzeigt, wie beispielsweise den Bremsdruck eines Nutzfahrzeugs. Falls nun der zentralen Steuereinheit 17 oder der eigenständigen Steuerschaltung 13 des Schrittmotors 14 ein eine elektrische Unterversorgung anzeigendes Signal U5, U8 oder UK gemeldet wird, koppelt sich die erfindungsgemäß mittelbar oder unmittelbar mit mindestens einem Pufferkondensator 15 gepufferte Steuerschaltung 13 des Schrittmotors 14 vorübergehend von der zentralen Steuereinheit 17 ab und bewegt den vom Schrittmotor 14 angetriebenen Zeiger 20 kontrolliert in seine Nullposition 23 bzw. auf einen anderen in bezug auf die Skalierung der Anzeigevorrichtung unkritischen Anzeigewert.

Wie es die Figur 4 in einem gestrichelt eingezeichneten, parallel zur Steuerschaltung 13 des Schrittmotors 14 angeordneten Zweig andeutet, kann für die Rückstellung des ebenso wie in den Figuren 1 bis 3 angeordneten Zeigers 20 auch eine einfache, im störungsfreien Betrieb von der zentralen Steuereinheit 17 oder der eigenständigen Steuerschaltung 13 des Schrittmotors 14 durch Koppelelemente 18 entkoppelte Hilfsschaltung 19 zur Anwendung kommen, die zum Beispiel aus einem Schieberegister oder einem 1 aus n codierten Zähler mit einer geeigneten Rückkopplung und einer Oszillatorschaltung besteht. Ein Einwirken dieser Hilfsschaltung 19 auf den Schrittmotor 14 soll erst dann erfolgen, wenn ein eine abrupte elektrische Unterversorgung anzeigendes Signal U5, U8 oder UK an der zentralen Steuereinheit 17, der eigenständigen Steuerschaltung 13 des Schrittmotors 14 oder direkt an der Hilfsschaltung 19 anliegt.

## Patentansprüche

1. Schaltungsanordnung zur kontrollierten Rückstellung eines von einem Schrittmotor (14) angetriebenen Zeigers (20) bei Ausfall der Versorgungsspannung (UV), wobei die Schaltungsanordnung eine Steuerschaltung (13) zur Ansteuerung des Schrittmotors (14) besitzt, wobei die Versorgungsspannung (UV) zumindest für die Steuerschaltung (13) des Schrittmotors (14) mit mindestens einem Pufferkondensator (15) gepuffert ist, wobei der mindestens eine Pufferkondensator (15) in seiner Kapazität derart ausgelegt ist, daß er die Steuerschaltung (13) für den Schrittmotor (14) wenigstens solange mit elektrischer Energie versorgt, bis die Steuerschaltung (13) den vom Schrittmotor (14) angetriebenen Zeiger (20) in eine auf die Skala (21) der Anzeigevorrichtung (22) bezogene Nullposition (23) bzw. auf einen anderen in bezug auf die Skalierung der Anzeigevorrichtung unkritischen Anzeigewert bewegt hat,
**dadurch gekennzeichnet, daß** die Rückstellung des Zeigers (20) in dessen Nullposition (23) bzw. auf einen anderen in bezug auf die Skalierung der Anzeigevorrichtung unkritischen Anzeigewert durch eine im Normalbetrieb von einer zentralen Steuereinheit (17) oder der Steuerschaltung (13) des Schrittmotors (14) durch Koppelelemente (18) entkoppelte Hilfsschaltung (19) erfolgt.

2. Schaltungsanordnung nach Anspruch 1, **dadurch gekennzeichnet, daß** die Steuerschaltung (13) den vom Schrittmotor (14) angetriebenen Zeigers (20) dann in dessen Nullposition (23) bzw. auf einen anderen in bezug auf die Skalierung der Anzeigevorrichtung unkritischen Anzeigewert bewegt, wenn von einem die Steuerschaltung (13) des Schrittmotors (14) energieversorgenden Netzteil (N) ein eine abrupte elektrische Unterversorgung anzeigendes Signal (U5, U8 oder UK) an die Steuerschaltung (13) abgegeben wird, wobei das eine elektrische Unterversorgung anzeigende Signal (U5, U8 oder UK) von einem im Netzteil (N) vorgesehenen Schaltnetzteil (1), einem Linearregler (9) oder einem Komparator (K), der die an der Schaltungsanordnung anliegende Betriebsspannung (UB) mit einem voreingestellten Referenzwert (UR) vergleicht, abgegeben wird.

3. Schaltungsanordnung nach einem der vorangegangenen Ansprüche, **dadurch gekennzeichnet, daß** der mindestens eine Pufferkondensator (15) im Netzteil (N) angeordnet ist.

4. Schaltungsanordnung nach einem der vorangegangenen Ansprüche, **dadurch gekennzeichnet, daß** der Schrittmotor (14), der den Zeiger (20) antreibt, von einer für die gesamte Schaltungsanordnung zentralen Steuereinheit (17) oder einer mit der zentralen Steuereinheit (17) verbundenen Steuerschaltung (13) angesteuert wird.

5. Schaltungsanordnung nach Anspruch 1, **dadurch gekennzeichnet, daß** die Hilfsschaltung (19) aus einem Schieberegister oder einem 1 aus n codierten Zähler mit einer geeigneten Rückkopplung und einer Oszillatorschaltung besteht.

6. Schaltungsanordnung nach einem der vorangegangenen Ansprüche, **dadurch gekennzeichnet, daß** der Schrittmotor (14) einen Zeiger (20) antreibt, der zu einer analogen Anzeigevorrichtung (22) in einem Kombiinstrument eines Fahrzeugs gehört.

7. Schaltungsanordnung nach Anspruch 6, **dadurch gekennzeichnet, daß** die Anzeigevorrichtung (22) eine für die Betriebssicherheit des Fahrzeugs wichtige Meßgröße anzeigt.

8. Schaltungsanordnung nach Anspruch 7, **dadurch gekennzeichnet, daß** die Anzeigevorrichtung (22) den Bremsdruck eines Nutzfahrzeugs anzeigt.

## Claims

1. Circuit arrangement for the controlled return of a pointer (20) driven by a stepping motor (14) in the event of failure of the supply voltage (UV), where the circuit arrangement has a control circuit (13) for actuating the stepping motor (14), where the supply voltage (UV) at least for the control circuit (13) for the stepping motor (14) is buffered with at least one buffer capacitor (15), the capacitance of the at least one buffer capacitor (15) being such that said buffer capacitor supplies the control circuit (13) for the stepping motor (14) with electrical power at least until the control circuit (13) has moved the pointer (20) driven by the stepping motor (14) to a zero position (23) in relation to the scale (21) on the display apparatus (22) or to another indicated value, which is noncritical in relation to the scaling on the display apparatus, **characterized in that** the pointer (20) is returned to its zero position (23) or to another indicated value which is noncritical in relation to the scaling on the display apparatus by an auxiliary circuit (19) which, in normal operation, is decoupled from a central control unit (17) or from the control circuit (13) for the stepping motor (14) by coupling elements (18).

2. Circuit arrangement according to claim 1, **characterized in that** the control circuit (13) moves the pointer (20) driven by the stepping motor (14) to its zero position (23) or to another indicated value which is noncritical in relation to the scaling on the display apparatus if a power supply unit (N) supplying power to the control circuit (13) for the stepping motor (14) outputs a signal (U5, U8 or UK) indicating an abrupt electrical undersupply to the control circuit (13), the signal (U5, U8 or UK) indicating an electrical undersupply being output by a switched-mode power supply (1) provided in the power supply unit (N), by a linear controller (9) or by a comparator (K) which compares the operating voltage (UB) applied to the circuit arrangement with a preset reference value (UR).

3. Circuit arrangement according to one of the preceding claims, **characterized in that** the at least one buffer capacitor (15) is arranged in the power supply unit (N).

4. Circuit arrangement according to one of the preceding claims, **characterized in that** the stepping motor (14) driving the pointer (20) is actuated by a central control unit (17) for the entire circuit arrangement or by a control circuit (13) which is connected to the central control unit (17).

5. Circuit arrangement according to claim 1, **characterized in that** the auxiliary circuit (19) comprises a shift register or a one-of-n-coded counter with suitable feedback and an oscillator circuit.

6. Circuit arrangement according to one of the preceding claims, **characterized in that** the stepping motor (14) drives a pointer (20) which is part of an analog display apparatus (22) in a combination instrument in a vehicle.

7. Circuit arrangement according to claim 6, **characterized in that** the display apparatus (22) indicates a measured variable significant to the operational reliability of the vehicle.

8. Circuit arrangement according to claim 7, **characterized in that** the display apparatus (22) indicates the brake pressure in a commercial vehicle.

## Revendications

1. Montage électrique destiné, dans le cas d'une défaillance de la tension d'alimentation (UV), à la remise à zéro contrôlée d'une aiguille (20) entraînée par un moteur pas à pas (14), où le montage électrique comporte un circuit de commande (13) pour l'excitation du moteur pas à pas (14), où la tension d'alimentation (UV) est, au moins pour le circuit de commande (13) du moteur pas à pas (14), connecté en tampon sur au moins un condensateur tampon (15), où la capacité du au moins un condensateur tampon (15) est dimensionnée de telle manière qu'il alimente en énergie électrique le circuit de commande (13) pour le moteur pas à pas (14) au moins jusqu'à ce que le circuit de commande (13) a déplacé l'aiguille (20) entraînée par le moteur pas à pas (14) dans une position zéro (23) par rapport à l'échelle graduée (21) du dispositif indicateur (22) ou, respectivement, sur une autre valeur d'affichage non critique par rapport à la graduation du dispositif indicateur, **caractérisé par le fait que** le retour de l'aiguille (20) dans sa position zéro (23) ou, respectivement, sur une autre valeur d'affichage non critique par rapport à la graduation du dispositif indicateur est effectué par un circuit auxiliaire (19) découplé grâce à des organes de couplage (18), en fonctionnement normal, d'une unité centrale de commande (17) ou du circuit de commande (13) du moteur pas à pas (14).

2. Montage électrique selon la revendication 1, **caractérisé par le fait que** le circuit de commande (13) déplace l'aiguille (20) entraînée par le moteur pas à pas (14) dans sa position zéro (23) ou, respectivement, sur une autre valeur d'affichage non critique par rapport à la graduation du dispositif indicateur, lorsqu'un bloc d'alimentation (N) alimentant en énergie le circuit de commande (13) du moteur pas à pas (14) envoie au circuit de commande (13) un signal (U5, U8 ou UK) indiquant une sous-alimentation électrique brusque, le signal (U5, U8 ou UK) indiquant une sous-alimentation électrique brusque étant envoyé par un module de distribution (1) prévu dans le bloc d'alimentation (N), par un régulateur linéaire (9) ou par un comparateur (K) qui compare la tension de service (UB) appliquée au montage électrique à une valeur de référence (UR) préréglée.

3. Montage électrique selon l'une des revendications précédentes, **caractérisé par le fait que** le au moins un condensateur tampon (15) est placé dans le bloc d'alimentation (N).

4. Montage électrique selon l'une des revendications précédentes, **caractérisé par le fait que** le moteur pas à pas (14), qui entraîne l'aiguille (20), est contrôlé par une unité centrale de commande (17) destinée à l'ensemble du montage électrique ou par un circuit de commande (13) relié à l'unité centrale de commande (17).

5. Montage électrique selon la revendication 1, **caractérisé par le fait que** le circuit auxiliaire (19) se compose d'un registre à décalage ou d'un compteur à code one-hot avec un circuit de contre-réaction approprié et un oscillateur.

6. Montage électrique selon l'une des revendications précédentes, **caractérisé par le fait que** le moteur pas à pas (14) commande une aiguille (20) qui fait partie d'un dispositif indicateur analogique (22) dans un instrument combiné d'un véhicule.

7. Montage électrique selon la revendication 6, **caractérisé par le fait que** le dispositif indicateur (22) affiche une grandeur de mesure importante pour la sécurité de fonctionnement du véhicule.

8. Montage électrique selon la revendication 7, **caractérisé par le fait que** le dispositif indicateur (22) affiche la pression de freinage d'un véhicule utilitaire.
